# EUROPEAN PATENT SPECIFICATION

(11) **EP 2 670 132 B1**
(45) Date of publication and mention of the grant of the patent: **29.03.2017**
(21) Application number: 13169760.9
(22) Date of filing: 29.05.2013
(51) Int. Cl.: H04N 5/445, H04N 5/91, H04N 21/414, H04N 21/422, H04N 21/431, H04N 21/472

(54) **Method and apparatus for playing video in portable terminal**
Verfahren und Vorrichtung zur Videowiedergabe auf einem tragbaren Endgerät
Procédé et appareil de lecture de vidéo dans un terminal portable

(30) Priority: 29.05.2012 KR 20120056470
(43) Date of publication of application: 04.12.2013
(73) Proprietor: Samsung Electronics Co., Ltd, Gyeonggi-do 443-742 (KR)
(72) Inventor: Chang, Moon-Su, Gyeonggi-do 443-742 (KR); Budda, Naveen Kumar, 560093 Bangalore (IN); Palukuri, Ramagopala Reddy, 560093 Bangalore (IN)
(74) Representative: Gover, Richard Paul

(56) References cited:
- EP-A1- 2 378 523
- WO-A1-2009/012315
- US-A1- 2007 077 024
- US-A1- 2009 116 817
- US-A1- 2009 153 475

## Description

### BACKGROUND OF THE INVENTION

### 1. Field of the Invention:

The present invention relates to a portable terminal. More particularly, the present invention relates to a method and apparatus for playing and searching for videos or moving pictures in a portable terminal.

### 2. Description of the Related Art:

With the improvement of the performance of electronic devices, recent electronic devices may provide a variety of functions instead of a simple single function. For example, portable terminals such as tablet computers and smart phones provide a plurality of functions such as a multimedia player function, an e-Book reader function, a document editor function, and a game console function.

In particular, as the portable terminals tend to have a large display screen of 4 inches, 4.3 inches, 4.8 inches, and 5.3 inches, the use of multimedia on portable terminals has been commonplace.

Among others, videos such as movies, dramas and animations are often played and, while the videos are played, a search function is frequently used by users to search for a specific playback position.

A video search of the related art function provides an interface such as a progress bar, allowing users to search for and change a playback position by touching (e.g., dragging) a specific point on the progress bar.

The progress bar-based search function is performed by a separate key and/or a user's fingertip. However, since the size of the progress bar is limited due to the limited size of the display screen of the portable terminals, users may have difficulty in searching for an exact desired playback position using the size-limited progress bar.

Therefore, a need exists for a system and method for playing and searching videos or moving pictures in a portable terminal.

EP2378523 A1 discloses a content information processing device in which a table associated with a video being played on a screen of the device includes information on the occurrence of objects in frames of the video.

US2009/116817 A1 discloses an image display apparatus where one or more progress bars corresponding to a currently playing video are displayed, and where each progress bar includes one or more marks for helping a user to search for predetermined scenes of the video.

WO2009/012315 A1 discloses a system and method for providing an embedded web-based video player for navigating video playlists and playing video content.

### SUMMARY OF THE INVENTION

Aspects of the present invention are to address at least the above-mentioned problems and/or disadvantages and to provide at least the advantages described below. Accordingly, an aspect of an exemplary embodiment of the present invention is to provide a method and apparatus for addressing the problem that a user may have difficulty in searching for a desired playback position of video by controlling a progress bar (e.g., by making a drag input on the progress bar), thus preventing the user from repeatedly searching for a desired playback position of video.

In accordance with an aspect of the present invention, a method for playing video in a portable terminal is provided. The method includes, in response to a request for displaying the progress bar while playing video on a main screen, displaying a progress bar, if a position on the progress bar is selected, generating a search screen over the main screen with a preset size while continuously playing the video on the main screen, and playing the video on the search screen starting from a playback position corresponding to the selected position.

In accordance with another aspect of the present invention, an apparatus for playing video in a portable terminal is provided. The apparatus includes a display for displaying video being played on at least one of a main screen and a search screen, and a controller for displaying a progress bar in response to a request for displaying the progress bar while playing the video on the main screen, and if a position on the progress bar is selected, generating a search screen with a preset size while continuously playing the video on the main screen, and playing the video on the search screen starting from a playback position corresponding to the selected position on the progress bar.

Other aspects, advantages, and salient features of the invention will become apparent to those skilled in the art from the following detailed description, which, taken in conjunction with the annexed drawings, discloses exemplary embodiments of the present invention.

### BRIEF DESCRIPTION OF THE DRAWINGS

The above and other aspects, features, and advantages of certain exemplary embodiments of the present invention will be more apparent from the following description taken in conjunction with the accompanying drawings, in which:
FIG. 1 shows a structure of a portable terminal, according to an exemplary embodiment of the present invention;
FIG. 2 shows a process of playing a video in a portable terminal according to an exemplary embodiment of the present invention;
FIG. 3A shows a first example of playing a video in a portable terminal according to an exemplary embodiment of the present invention;
FIG. 3B shows a second example of playing a video in a portable terminal according to an exemplary embodiment of the present invention;
FIG. 3C shows a third example of playing a video in a portable terminal according to an exemplary embodiment of the present invention;
FIG. 3D shows a fourth example of playing a video in a portable terminal according to an exemplary embodiment of the present invention;
FIG. 3E shows a fifth example of playing a video in a portable terminal according to an exemplary embodiment of the present invention; and
FIG. 3F shows a sixth example of playing a video in a portable terminal according to an exemplary embodiment of the present invention.

Throughout the drawings, the same drawing reference numerals will be understood to refer to the same elements, features and structures.

### DETAILED DESCRIPTION OF EXEMPLARY EMBODIMENTS

The following description with reference to the accompanying drawings is provided to assist in a comprehensive understanding of exemplary embodiments of the present invention as defined by the claims and their equivalents. It includes various specific details to assist in the understanding, but these are to be regarded as merely exemplary. Accordingly, those of ordinary skill in the art will recognize that various changes and modifications of the embodiments described herein can be made without departing from the scope of the invention. In addition, descriptions of well-known functions and constructions may be omitted for clarity and conciseness.

The terms and words used in the following description and claims are not limited to the bibliographical meanings, but, are merely to enable a clear and consistent understanding of the invention. Accordingly, it should be apparent to those skilled in the art that the following description of exemplary embodiments of the present invention is provided for illustration purpose only and not for the purpose of limiting the invention as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

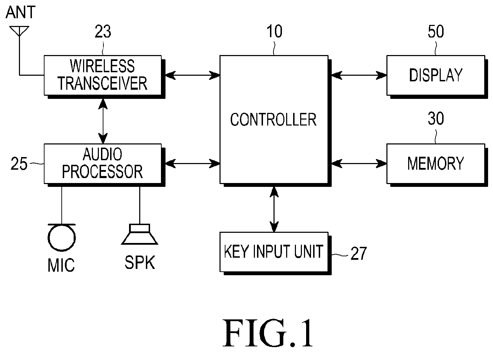

FIG. 1 illustrates a structure of a portable terminal according to an exemplary embodiment of the present invention. The portable terminal is generally an easy-to-carry electronic device such as a feature phone, a tablet computer, a smart phone powered by mobile Operating System (OS) such as Windows 8®, iOS®, Android® and Bada®, and laptop computers powered by Windows® or Macintosh®.

An example portable terminal, to which an exemplary embodiment of the present invention is applicable, will be described below with reference to FIG. 1.

Referring to FIG. 1, the example portable terminal comprises a wireless transceiver 23 that includes a Radio Frequency (RF) unit and a modulator/demodulator (modem). The RF unit includes an RF transmitter for up-converting a frequency of transmission signals and amplifying the up-converted transmission signals, and an RF receiver for low-noise-amplifying received signals and down-converting a frequency of the amplified received signals. The modem includes a transmitter for coding and modulating transmission signals, and a receiver for demodulating and decoding signals received from the RF unit.

An audio processor 25 may include a coder/decoder (codec). The codec includes at least one of a data codec and an audio codec. The data codec processes packet data and the like, and the audio codec processes audio signals such as voice and multimedia files. The audio processor 25 may convert digital audio signals received from the modem into analog audio signals using the audio codec and play the analog audio signals via a speaker SPK. The audio processor 25 may convert analog audio signals received from a microphone MIC into digital audio signals using the audio codec and transfer the digital audio signals to the modem. The codecs may be separately provided or may be included in a controller 10.

In accordance with an exemplary embodiment of the present invention, using the audio processor 25, the controller 10 may process audio signals for a video being played during video playback and output the processed audio signals to a user through the speaker SPK.

A key input unit 27 may include alphanumeric/character keys needed to input alphanumeric/character information and function keys (or a touchpad) needed to perform a variety of functions. If a display 50 includes a capacitive or resistive touch screen, the key input unit 27 may include a minimum number of preset keys and the display 50 may include some key input functions associated with the key input unit 27.

In accordance with an exemplary embodiment of the present invention, using the key input unit 27, a user may request the controller 10 to display a progress bar while playing a video. Thus, the user may search the video being played using the displayed progress bar.

A memory 30 may include at least one of a program memory and a data memory. The program memory stores a control program for controlling the general operation of the portable terminal. The memory 30 may further include an external memory such as a Compact Flash (CF) card, a Secure Digital (SD) card, a Micro Secure Digital (Micro-SD) card, a Mini Secure Digital (Mini-SD) card, an Extreme Digital (xD) card, and/or a memory stick. The memory 30 may also include a storage disk such as a Hard Disk Drive (HDD) and/or a Solid State Disk (SSD).

In accordance with an exemplary embodiment of the present invention, the memory 30 may store videos or images to be played in the portable terminal. The videos stored in the memory 30 may be videos stored through Universal Serial Bus (USB) connection or videos that are streamed via a wired or wireless communication link.

The display 50 may include a Liquid Crystal Display (LCD) display or an Organic Light Emitting Diodes (OLED) display. The OLED display may be classified into a Passive Mode OLED (PMOLED) display and an Active Mode OLED (AMOLED) display. The display 50 outputs or displays a variety of display information generated in the portable terminal. In one exemplary embodiment that includes a capacitive or resistive touch screen, the display 50 and the key input unit 27 may jointly serve as the input unit 27 for controlling the portable terminal.

In accordance with an exemplary embodiment of the present invention, the display 50 may play video on at least one of a main screen and a search screen, whereby the search screen may be superimposed over a portion of the main screen. Using the display 50 and/or key input unit 27, the user may enter a request for displaying a progress bar and select a search screen.

The controller 10 controls the overall operation of the portable terminal and may switch and control operations of the portable terminal depending on the user inputs received via the key input unit 27 and/or the display 50. In accordance with an exemplary embodiment of the present invention, the controller 10 provides a video playback method that includes, in response to a request for displaying the progress bar while playing video on a main screen, displaying a progress bar. If a position on the progress bar is selected, the method generates a search screen with a preset size while continuously playing the video and plays the video on the search screen starting from a playback position corresponding to the selected position. A detailed operation of the controller 10 according to an exemplary embodiment of the present invention will be described below.

It is noted that additional devices that can be included in the portable terminal, such as a Bluetooth module, a camera module, a Global Positioning System (GPS) module, a Wi-Fi module, a proximity sensor, and a Digital Multimedia Broadcasting (DMB) receiver. Although not shown in FIG. 1, it will be apparent to those of ordinary skill in the art that these devices may also be included to provide their respective functions in the portable terminal.

For example, the portable terminal may receive streaming video via the Bluetooth® module or the Wi-Fi module, and the streaming video may be played on at least one of the main screen and the search screen in the below-described exemplary embodiment of the present invention.

In addition, video may be recorded by the camera module, and the recorded video may be played on at least one of the main screen and the search screen in the below-described exemplary embodiment of the present invention.

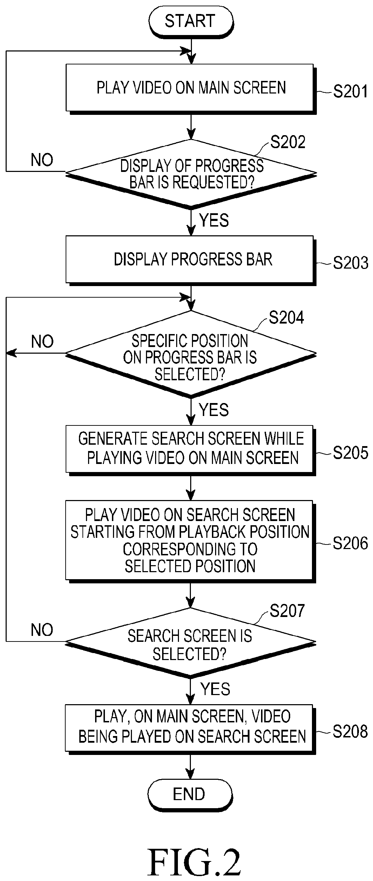

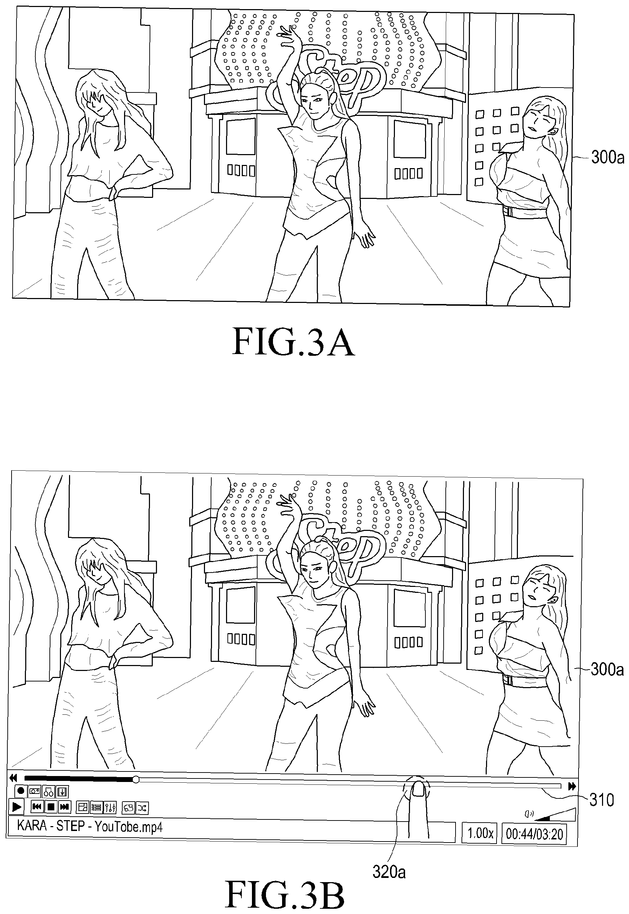

FIG. 2 illustrates a flow diagram of a process of playing a video in a portable terminal according to an exemplary embodiment of the present invention. FIGs. 3A to 3F show example screen illustrations of a process of playing video in a portable terminal according to an exemplary embodiment of the present invention. An exemplary embodiment of the present invention will be described below with reference to the accompanying drawings.

Referring to FIGs. 2-3F, while playing video on a main screen at step S201, the controller 10 determines if there is a request for displaying a progress bar for the video at step S202. The controller 10 displays the progress bar if there is a request for displaying a progress bar at step S203. If there is no request for displaying a progress bar as step S202, the controller 10 returns to step S201 to continue playing video on the main screen.

A user may request playback of a predefined video using a file explorer or a video playback application. In response to the playback request, the controller 10 may play the requested video on a preset screen (e.g., main screen). Referring to the example illustrated in FIG. 3A, the controller 10 plays the requested video on a main screen 300a for the user.

While the video is played on the main screen 300a, the user may request display of a progress bar to search for (e.g., change) a desired playback position of the video being played. For example, if the user enters a menu button (not shown) or selects (e.g., touches) the main screen 300a while video is played on the main screen 300a as shown in FIG. 3A, then the controller 10 displays a progress bar 310 as shown in FIG. 3B. As illustrated in FIG. 3B, the user may select the playback position of the video being played starting from the selected playback position using the progress bar 310.

As illustrated in FIG. 2, if a position on the progress bar 310 is selected at step S204, the controller 10 generates a search screen with a preset size while continuously playing the video on the main screen 300a at step S205, and, at step S206, plays the video on the search screen starting from a playback position corresponding to the selected position at step S204. That is, the search screen may be superimposed over a portion of the main screen.

If the progress bar 310 is displayed as illustrated in FIG. 3B in response to a request for playing a progress bar while the video is played on the main screen 300a, the user may search for a desired playback position of the video being played on the main screen 300a by selecting (e.g., touching) a specific position on the progress bar 310. Searching for (or changing) a playback position of the video being played on the main screen by selecting a specific position on the progress bar 310 corresponds to the related art. However, when the user selects a playback position of video using the progress bar according to the related art, the specific position that the user selected on the progress bar may not be exactly match the playback position that the user desires to search for. Despite the mismatch, the video may be displayed on the main screen 300a starting from the playback position corresponding to the selected position on the progress bar. The following examples are provided to solve this problem, and description thereof will be given below.

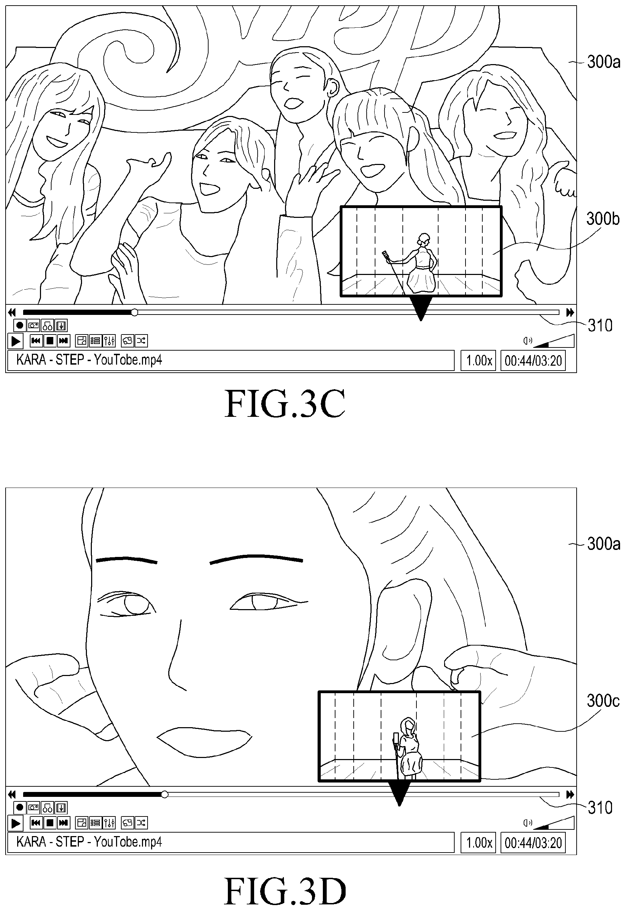

In an exemplary embodiment of the present invention, if a position 320a illustrated in FIG. 3B is selected on the progress bar 310, the controller 10 generates a search screen 300b around the position 320a as shown in FIG. 3C, and plays the video starting from the playback position corresponding to the selected position 320a on the search screen 300b. When the video is played on the search screen 300b starting from the playback position corresponding to the position 320a, the playback of the video on the main screen 300a also continues. That is, different portions of the same video are simultaneously displayed on the main screen 300a and the search screen 300b.

In this manner, while watching the video on the main screen 300a, the user may determine a specific playback position on the search screen 300b.

The search screen generated by the user's selecting a specific position on the progress bar 310 has a preset size that may be changed by separate settings. Preferably, the preset size of the search screen is configured so as not to interfere with the playback of the video on the main screen.

In accordance with an exemplary embodiment of the present invention, the user may change the preset size of the search screen while the video is displayed on the search screen. For example, the user may change the size of the search screen to suit his/her own tastes by performing a 'pinch to zoom in' or 'pinch to zoom out' action on the search screen. In response, the controller 10 may play the video on the resized search screen.

The search screen may be displayed to be overlaid (i.e., superimposed) on the main screen. The transparency of the search screen may be adjusted such that some (e.g., an area overlapping the search screen) of the main screen may be displayed on the search screen.

Returning to FIG. 2, if the search screen on which the video is played is selected at step S207, the controller 10 plays the video being played on the search screen on the main screen.

As described above with reference to FIGs. 3B and 3C, when searching or checking the on-screen contents of the video that is being played on the search screen 300b starting from the playback position corresponding to a position 320a and while watching on the video being played the main screen 300a, the user may determine that the part of the video that the user wants to search for (or the part to which he/she wants to change the playback position) is currently being played on the search screen 300b.

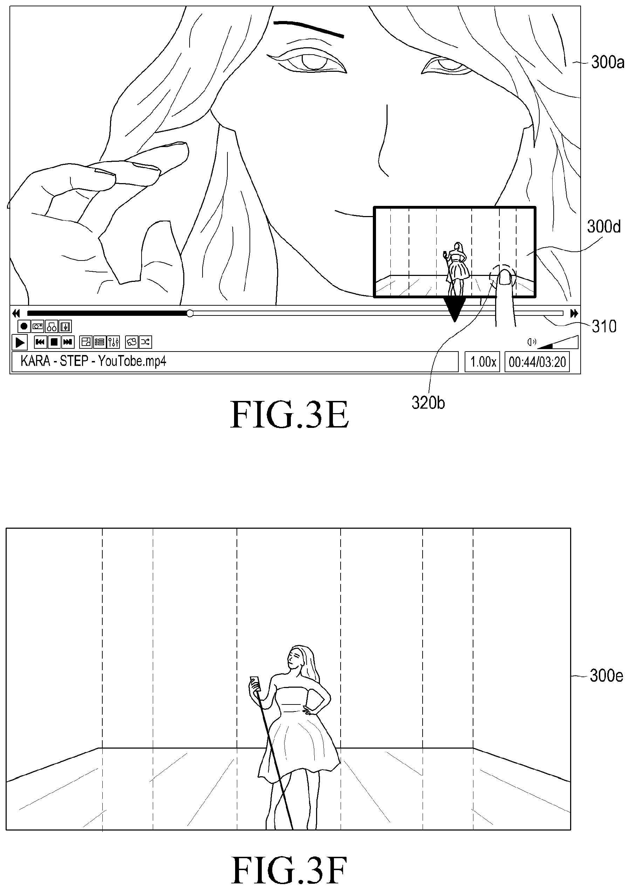

For example, with the passage of the time, the video being played on the search screen 300b illustrated in FIG. 3C is changed to the video being played on a search screen 300c shown in FIG. 3D. Similarly, with the passage of the time, the video being played on the search screen 300c shown in FIG. 3D is changed to the video being played on a search screen 300d shown in FIG. 3E.

Thereafter, if the video being played on the search screen 300d is the video that the user desired, the user may select the search screen 300d, as illustrated by reference numeral 320b in FIG. 3E.

If the search screen (e.g., search screen 300d) on which the video is being played is selected by the user as shown by reference numeral 320b in FIG. 3E, the controller 10 plays the video being played on the search screen 300d on a main screen 300e, as shown in FIG. 3F. As illustrated in FIG. 3F, in response to selecting the search screen 300d, the controller stops displaying the progress bar 310 and the search screen 300d.

In an exemplary embodiment of the present invention, if a search screen is not selected within a predetermined time (e.g., 5 seconds) after being generated, the controller 10 may no longer display the generated search screen. In this manner, when having no intention to search the video on the search screen, the user may watch the video on the main screen by just waiting for a predetermined time (e.g., 5 seconds) without separate user input to no longer display the search screen.

In accordance with an exemplary embodiment of the present invention, while watching the video on the main screen 300a, the user may determine that the display on the search screen 300b corresponds to the desired playback position for the video that the user wants to consume. Thereafter, the user may select the search screen (e.g., by touching the search screen with the user's fingertip) to watch the desired playback position for the video on the main screen.

If the video being played on the search screen is selected, the progress bar 310 and the search screen 300d being displayed in FIG. 3E are no longer displayed as shown in FIG. 3F, thereby avoiding interfering with the playback of the video.

Thereafter, if necessary, the user may search again the video by requesting display of the progress bar in accordance with the exemplary embodiment of the present invention described with reference to FIG. 2.

As is apparent from the foregoing description, the above-described embodiments of the present invention provide a function of allowing a user to easily search for his/her desired playback position on the video being played, thereby preventing the user from repeatedly searching for the user's desired playback position of video.

In addition, in accordance with the above-described exemplary embodiments of the present invention, the user may conveniently search for another playback position of video being played, while watching the video.

While the invention has been shown and described with reference to certain exemplary embodiments thereof, it will be understood by those skilled in the art that various changes in form and details may be made therein without departing from the scope of the invention as defined by the appended claims and their equivalents.

## Claims

1. A method for playing video in a portable terminal, the method comprising:
in response to a request (S202) for displaying a progress bar while playing (S201) video on a main screen, displaying (S203) the progress bar;
if a position on the progress bar is selected (S204), generating (S205) a search screen over the main screen with a preset size while continuously playing the video on the main screen; and
playing (S206) the video on the search screen starting from a playback position corresponding to the selected position.

2. The method of claim 1, wherein the playing of the video on the search screen comprises continuing the playback of the video on the main screen.

3. The method of claim 1, further comprising changing the preset size of the search screen.

4. The method of claim 1, further comprising, if the search screen is selected (S207), playing (S208) the video being played on the search screen on the main screen.

5. The method of claim 4, further comprising, in response to selecting the search screen, stopping the display of the progress bar.

6. The method of claim 1, wherein the position on the progress bar is selected by a touch input.

7. The method of claim 4, wherein the search screen is selected by a touch input.

8. The method of claim 1, further comprising, if the search screen is not selected within a predetermined time after being generated, stopping the generating of the search screen.

9. An apparatus for playing video in a portable terminal, the apparatus comprising:
a display (50) for displaying video being played on at least one of a main screen and a search screen; and
a controller (10) for displaying a progress bar in response to a request for displaying the progress bar while playing the video on the main screen, and, if a position on the progress bar is selected, generating a search screen with a preset size while continuously playing the video on the main screen, and playing the video on the search screen starting from a playback position corresponding to the selected position on the progress bar.

10. The apparatus of claim 9, wherein, when playing the video on the search screen, the controller (10) continues the playback of the video on the main screen.

11. The apparatus of claim 9, wherein, in response to a request to change the preset size of the search screen, the controller (10) changes the preset size of the search screen.

12. The apparatus of claim 9, wherein, if the search screen is selected, the controller (10) plays the video being played on the search screen on the main screen.

13. The apparatus of claim 12, wherein, in response to selecting the search screen, the controller (10) stops displaying the progress bar and stops generating the search screen.

14. The apparatus of claim 9, wherein the position on the progress bar is selected by a touch input on a touch screen of the display (50).

15. The apparatus of claim 12, wherein the search screen is selected by a touch input on a touch screen of the display (50).

16. The apparatus of claim 9, wherein, if the search screen is not selected within a predetermined time after being generated, the controller (10) stops the generating of the search screen.

## Patentansprüche

1. Verfahren zum Wiedergeben von Video in einem tragbaren Endgerät, wobei das Verfahren Folgendes beinhaltet:
Anzeigen (S203) des Fortschrittsbalkens als Reaktion auf eine Anforderung (S202) zum Anzeigen eines Fortschrittsbalkens beim Wiedergeben (S201) von Video auf einem Hauptbildschirm;
Erzeugen (S205), wenn eine Position auf dem Fortschrittsbalken gewählt (S204) wird, eines Suchbildschirms über dem Hauptbildschirm mit einer voreingestellten Größe unter fortlaufendem Wiedergeben des Videos auf dem Hauptbildschirm; und
Wiedergeben (S206) des Videos auf dem Suchbildschirm beginnend mit einer Wiedergabeposition, die der gewählten Position entspricht.

2. Verfahren nach Anspruch 1, wobei das Wiedergeben des Videos auf dem Suchbildschirm das Fortsetzen der Wiedergabe des Videos auf dem Hauptbildschirm beinhaltet.

3. Verfahren nach Anspruch 1, das ferner das Ändern der voreingestellten Größe des Suchbildschirms beinhaltet.

4. Verfahren nach Anspruch 1, das ferner das Wiedergeben (S208), wenn der Suchbildschirm gewählt (S207) wird, des auf dem Suchbildschirm wiedergegebenen Videos auf dem Hauptbildschirm beinhaltet.

5. Verfahren nach Anspruch 4, das ferner das Stoppen der Anzeige des Fortschrittsbalkens als Reaktion auf das Wählen des Suchbildschirms beinhaltet.

6. Verfahren nach Anspruch 1, wobei die Position auf dem Fortschrittsbalken durch eine Berührungseingabe gewählt wird.

7. Verfahren nach Anspruch 4, wobei der Suchbildschirm durch eine Berührungseingabe gewählt wird.

8. Verfahren nach Anspruch 1, das ferner das Stoppen, wenn der Suchbildschirm nicht innerhalb einer vorbestimmten Zeit nach dem Erzeugen gewählt wird, des Erzeugens des Suchbildschirms beinhaltet.

9. Vorrichtung zum Wiedergeben von Video in einem tragbaren Endgerät, wobei die Vorrichtung Folgendes umfasst:
ein Display (50) zum Anzeigen von Video, das auf einem Hauptbildschirm und/oder einem Suchbildschirm wiedergegeben wird; und
eine Steuerung (10) zum Anzeigen eines Fortschrittsbalkens als Reaktion auf eine Anforderung zum Anzeigen des Fortschrittsbalkens beim Wiedergeben des Videos auf dem Hauptbildschirm und zum Erzeugen, wenn eine Position auf dem Fortschrittsbalken gewählt wird, eines Suchbildschirms mit einer voreingestellten Größe unter fortlaufendem Wiedergeben des Videos auf dem Hauptbildschirm, und Wiedergeben des Videos auf dem Suchbildschirm beginnend mit einer Wiedergabeposition, die der gewählten Position auf dem Fortschrittsbalken entspricht.

10. Vorrichtung nach Anspruch 9, wobei die Steuerung (10) beim Wiedergeben des Videos auf dem Suchbildschirm die Wiedergabe des Videos auf dem Hauptbildschirm fortsetzt.

11. Vorrichtung nach Anspruch 9, wobei die Steuerung (10) als Reaktion auf eine Anforderung zum Ändern der voreingestellten Größe des Suchbildschirms die voreingestellte Größe des Suchbildschirms ändert.

12. Vorrichtung nach Anspruch 9, wobei die Steuerung (10), wenn der Suchbildschirm gewählt wird, das auf dem Suchbildschirm wiedergegebene Video auf dem Hauptbildschirm wiedergibt.

13. Vorrichtung nach Anspruch 12, wobei die Steuerung (10) als Reaktion auf die Wahl des Suchbildschirms die Anzeige des Fortschrittsbalkens stoppt und die Erzeugung des Suchbildschirms stoppt.

14. Vorrichtung nach Anspruch 9, wobei die Position auf dem Fortschrittsbalken durch eine Berührungseingabe auf einem Berührungsbildschirm des Display (50) gewählt wird.

15. Vorrichtung nach Anspruch 12, wobei der Suchbildschirm durch eine Berührungseingabe auf einem Berührungsbildschirm des Display (50) gewählt wird.

16. Vorrichtung nach Anspruch 9, wobei die Steuerung (10), wenn der Suchbildschirm nicht innerhalb einer vorbestimmten Zeit nach dem Erzeugen gewählt wird, das Erzeugen des Suchbildschirms stoppt.

## Revendications

1. Procédé destiné à lire la vidéo dans un terminal portable, le procédé comprenant :
en réaction à une requête (S202) pour afficher une barre de progression pendant que s'effectue la lecture (S201) de la vidéo sur un écran principal, le fait d'afficher (S203) la barre de progression ;
si une position sur la barre de progression est sélectionnée (S204), le fait de générer (S205) un écran de recherche au-dessus de l'écran principal avec une taille préréglée pendant que s'effectue en continu la lecture de la vidéo sur l'écran principal ; et
le fait de lire (S206) la vidéo sur l'écran de recherche en partant d'une position de reproduction correspondant à la position sélectionnée.

2. Procédé selon la revendication 1, la lecture de la vidéo sur l'écran de recherche comprenant la continuation de la reproduction de la vidéo sur l'écran principal.

3. Procédé selon la revendication 1, comprenant en outre le fait de changer la taille préréglée de l'écran de recherche.

4. Procédé selon la revendication 1, comprenant en outre, si l'écran de recherche est sélectionné (S207), le fait de lire (S208) la vidéo en train d'être lue sur l'écran de recherche sur l'écran principal.

5. Procédé selon la revendication 4, comprenant en outre, en réaction à la sélection de l'écran de recherche, le fait d'arrêter l'affichage de la barre de progression.

6. Procédé selon la revendication 1, la position sur la barre de progression étant sélectionnée par une saisie tactile.

7. Procédé selon la revendication 4, l'écran de recherche étant sélectionné par une saisie tactile.

8. Procédé selon la revendication 1, comprenant en outre, si l'écran de recherche n'est pas sélectionné dans les limites d'un temps prédéterminé après avoir été généré, le fait d'arrêter la génération de l'écran de recherche.

9. Appareil permettant de lire la vidéo dans un terminal portable, l'appareil comprenant :
un afficheur (50) pour afficher la vidéo en train d'être lue sur au moins un écran parmi un écran principal et un écran de recherche ; et
un contrôleur (10) pour afficher une barre de progression en réaction à une requête pour afficher la barre de progression pendant que s'effectue la lecture de la vidéo sur l'écran principal, et, si une position sur la barre de progression est sélectionnée, générer un écran de recherche avec un taille préréglée pendant que s'effectue en continu la lecture de la vidéo sur l'écran principal, et lire la vidéo sur l'écran de recherche en partant d'une position de reproduction correspondant à la position sélectionnée sur la barre de progression.

10. Appareil selon la revendication 9, lors de la lecture de la vidéo sur l'écran de recherche, le contrôleur (10) continuant la reproduction de la vidéo sur l'écran principal.

11. Appareil selon la revendication 9, en réaction à une requête pour changer la taille préréglée de l'écran de recherche, le contrôleur (10) changeant la taille préréglée de l'écran de recherche.

12. Appareil selon la revendication 9, si l'écran de recherche est sélectionné, le contrôleur (10) lisant la vidéo en train d'être lue sur l'écran de recherche sur l'écran principal.

13. Appareil selon la revendication 12, en réaction à la sélection de l'écran de recherche, le contrôleur (10) arrêtant l'affichage de la barre de progression et arrêtant la génération de l'écran de recherche.

14. Appareil selon la revendication 9, la position sur la barre de progression étant sélectionnée par une saisie tactile sur un écran tactile de l'afficheur (50).

15. Appareil selon la revendication 12, l'écran de recherche étant sélectionné par une saisie tactile sur un écran tactile de l'afficheur (50).

16. Appareil selon la revendication 9, si l'écran de recherche n'est pas sélectionné dans les limites d'un temps prédéterminé après avoir été généré, le contrôleur (10) arrêtant la génération de l'écran de recherche.
